# EUROPÄISCHE PATENTANMELDUNG

(11) **EP 4 563 320 A1**
(43) Veröffentlichungstag der Anmeldung: **04.06.2025**
(21) Anmeldenummer: 23212945.2
(22) Anmeldetag: 29.11.2023
(51) Int. Cl.: B29C 45/26, B29C 45/73, B29C 45/76

(54) **VERFAHREN ZUM ÜBERWACHEN EINES SPRITZGUSSVORGANGS, KUNSTSTOFF-SPRITZGIESSMASCHINE**

(71) Anmelder: G.A. Röders Holding GmbH & Co. KG, 29614 Soltau (DE)
(72) Erfinder: Röders, Andreas, 29614 Soltau (DE)
(74) Vertreter: Glawe, Delfs, Moll

(57) **Zusammenfassung**

Verfahren zum Überwachen eines Spritzgussvorgangs, bei dem ein Kunststoffmaterial in eine Kavität (16) einer Spritzgussform (15) eingespritzt wird und bei dem das Kunststoffmaterial während einer Kühlphase (53, 54) in der Kavität (16) gehalten wird. Die Spritzgussform (15) umfasst einen in die Kavität (16) hineinragenden und mit einer Verdampfungskammer (28) versehenen Formkern (18). Während der Kühlphase (53, 54) wird eine Flüssigkeit in die Verdampfungskammer (28) gefördert, so dass die Flüssigkeit in der Verdampfungskammer (28) verdampft. Während der Kühlphase (53, 54) wird ein Schallsignal (38) von in der Spritzgussform (15) entstehenden Geräuschen aufgenommen. Die Erfindung betrifft auch eine Kunststoff-Spritzgießmaschine.

## Beschreibung

Die Erfindung betrifft ein Verfahren zum Überwachen eines Spritzgussvorgangs und eine Kunststoffspritzgießmaschine.

In Kunststoff-Spritzgießmaschinen wird ein Kunststoffmaterial in flüssigem oder pastösem Zustand in eine Kavität einer Spritzgussform eingespritzt. Das Kunststoffmaterial kühlt ab und geht in einen festen Zustand über. Es entsteht ein Spritzgussteil, das eine der Kavität entsprechende Form hat. Die Spritzgussform kann geöffnet werden, um das Spritzgussteil aus der Form zu entnehmen.

In bestimmten Anwendungsfällen umfasst die Spritzgussform einen Formkern, der in die Kavität der Spritzgussform hineinragt. Innerhalb des Formkerns kann eine Verdampfungskammer angeordnet sein, in der beim Abkühlen des Kunststoffmaterials eine Flüssigkeit verdampft wird, um dem Kunststoffmaterial in der Umgebung des Formkerns Wärme zu entziehen, WO 2019/158521 A1.

Die Qualität des Spritzgussteils hängt davon ab, dass der Kühlvorgang in dem Formkern in Einklang mit den Vorgaben abläuft. Sowohl durch übermäßige Kühlung als auch durch nicht ausreichende Kühlung kann die Qualität des Spritzgussteils beeinträchtigt werden. Eine Qualitätsüberwachung ist nicht ganz einfach, weil die Qualität des Spritzgussteils von der inneren Struktur des Materials abhängt und diese häufig nicht zerstörungsfrei festgestellt werden kann.

Der Erfindung liegt die Aufgabe zugrunde, ein Verfahren zum Überwachen eines Spritzgussvorgangs und eine Kunststoff-spritzgießmaschine, mit denen diese Nachteile vermindert werden. Die Aufgabe wird gelöst mit den Merkmalen der unabhängigen Ansprüche. Vorteilhafte Ausführungsformen sind in den Unteransprüchen angegeben.

Bei dem erfindungsgemäßen Verfahren zum Überwachen eines Spritzgießvorgangs wird ein Kunststoffmaterial in eine Kavität einer Spritzgussform eingespritzt. Während einer Kühlphase wird das Kunststoffmaterial in der Kavität gehalten. Die Spritzgussform umfasst einen in die Kavität hineinragenden und mit einer Verdampfungskammer versehenen Formkern. Während der Kühlphase wird eine Flüssigkeit in die Verdampfungskammer gefördert, so dass die Flüssigkeit in der Verdampfungskammer verdampft. Während der Kühlphase wird ein Schallsignal von in der Spritzgussform entstehenden Geräuschen aufgenommen.

Die Erfindung beruht auf der Erkenntnis, dass der Verdampfungsvorgang, der während der Kühlphase in der Verdampfungskammer abläuft, mit einer Geräuschabgabe verbunden ist. Ein während der Kühlphase aufgenommenes Schallsignal umfasst die durch den Verdampfungsvorgang entstehenden Geräusche und erlaubt damit Rückschlüsse über den Verlauf des Kühlvorgangs.

Die Kühlphase bezeichnet einen zeitlichen Ausschnitt eines Arbeitszyklus der Spritzgießmaschine. Zu Beginn eines Arbeitszyklus wird die Spritzgussform geschlossen, sodass die Kavität einen geschlossenen Hohlraum bildet. In einer Einspritzphase wird Kunststoffmaterial in flüssigem oder pastösem Zustand in die Kavität eingespritzt, sodass die Kavität mit dem Kunststoffmaterial gefüllt wird. Die Einspritzphase kann wenige Sekunden dauern, beispielsweise zwischen 0,2 s und 5 s. Nach dem Ende der Einspritzphase wird während einer Nachdrückphase weiterhin Druck aus der Zuführeinheit heraus auf das Kunststoffmaterial in der Kavität ausgeübt. Die Nachdrückphase endet, wenn zu der Zuführeinheit benachbarte Mengen des Kunststoffmaterials ausgehärtet sind, sodass der Druck nicht mehr auf von der Zuführeinheit entfernte Mengen des Kunststoffmaterials wirkt. Die Länge der Nachdrückphase kann beispielsweise zwischen 2 s und 50 s liegen. Die verbleibende Zeit, in der das Kunststoffmaterial aushärtet, wird als Restkühlzeit bezeichnet. Die Länge der Restkühlzeit kann beispielsweise zwischen 2 s und 50 s liegen. Wenn das Kunststoffmaterial ausreichend ausgehärtet ist, kann die Spritzgussform geöffnet werden und das Spritzgussteil entnommen werden. Damit ist ein Arbeitszyklus der Spritzgießmaschine abgeschlossen, und der nächste Arbeitszyklus kann beginnen. Die Spritzgießmaschine kann für eine zyklische Wiederholung dieses Ablaufs eingerichtet sein.

Während der Kühlphase sinkt die Temperatur des Kunststoffmaterials in der Kavität. Die Kühlphase beginnt nach dem Ende der Einspritzphase und endet, wenn das Kunststoffmaterial seine niedrigste Temperatur innerhalb der Kavität erreicht hat. Spätestens endet die Kühlphase, wenn die Spritzgussform geöffnet wird, um das fertige Spritzgussteil auszuwerfen. Das Zuführen von Flüssigkeit zu der Verdampfungskammer kann sich über eine Förderphase erstrecken. Die Förderphase kann einem Teil der Kühlphase entsprechen. Das Ende der Förderphase kann vor dem Ende der Kühlphase liegen. Während der Förderphase kann kontinuierlich oder intermittierend Flüssigkeit zu der Verdampfungskammer zugeführt werden.

Die Flüssigkeit kann unter Hochdruck zu der Verdampfungskammer zugeführt werden. Beispielsweise kann der Druck der Flüssigkeit um wenigstens 5 bar, vorzugsweise wenigstens 10 bar, weiter vorzugsweise wenigstens 20 bar höher sein als der Druck in der Verdampfungskammer. Auf diese Weise kann verhindert werden, dass die Flüssigkeit schon vor dem Eintritt in die Verdampfungskammer verdampft. Die Angabe bezieht sich auf den Druck in einer Flüssigkeitsleitung, über den die Flüssigkeit zu der Verdampfungskammer zugeführt wird. Insbesondere bezieht die Angabe sich auf einen Abschnitt der Flüssigkeitsleitung, der benachbart zu einer Austrittsöffnung ist, über die die Flüssigkeit in die Verdampfungskammer austritt. Der Abschnitt der Flüssigkeitsleitung kann durch ein Kapillarrohr gebildet werden, dessen Durchmesser beispielsweise zwischen 0,5 mm und 2 mm, vorzugsweise zwischen 0,8 mm und 1,2 mm liegen kann. Ein weiter von der Austrittsöffnung beabstandeter Abschnitt der Flüssigkeitsleitung kann einen Durchmesser haben, der deutlich größer ist als der Durchmesser des Kapillarrohrs. Die Spritzgießmaschine kann eine Hochdruckpumpe umfassen, mit der die Flüssigkeit entlang der Förderleitung gefördert wird.

Durch den Verdampfungsvorgang sinkt die Temperatur in der Umgebung des Formkerns, bis die Verdampfungstemperatur der Flüssigkeit erreicht ist. Führt man über diesen Zeitpunkt hinaus Flüssigkeit zu, so verdampft die Flüssigkeit nicht mehr und es findet eine Kühlung auf einen Wert unterhalb der Verdampfungstemperatur statt. Die Förderphase kann bis zu einem Zeitpunkt fortgesetzt werden, zu dem die zugeführte Flüssigkeit in der Verdampfungskammer nicht mehr verdampft. Mit anderen Worten kann die Förderphase den Zeitpunkt umfassen, zu dem der Verdampfungsvorgang endet.

Der Zeitpunkt, zu dem der Verdampfungsvorgang endet, ist im Rahmen des erfindungsgemäßen Verfahrens von besonderem Interesse. Der Beginn der Förderphase ist im Allgemeinen bekannt, da die Flüssigkeitszufuhr durch ein Steuersignal in Gang gesetzt wird. Ist auch der Zeitpunkt bekannt, zu dem der Verdampfungsvorgang endet, so kann die Dauer des Verdampfungsvorgangs ermittelt werden, die zum Beispiel für eine Ermittlung geeigneter Parameter für die Durchführung des Verfahrens oder für Zwecke der Qualitätsüberwachung von Interesse sein kann. Das Verfahren kann so durchgeführt werden, dass das Schallsignal aufgenommen wird, während der Verdampfungsvorgang endet. Mit anderen Worten beginnt kann das aufgenommene Schallsignal einen Zeitraum umfassen, in den das Ende des Verdampfungsvorgangs fällt.

Die Schallaufzeichnung können weitere Phasen des Arbeitszyklus der Spritzgießmaschine umfassen. Beispielsweise kann das Schallsignal während der gesamten Förderphase aufgenommen werden. Möglich ist auch, dass das Schallsignal während des gesamten Arbeitszyklus der Spritzgießmaschine aufgenommen wird oder dass das Schallsignal kontinuierlich über mehrere Arbeitszyklen der Spritzgießmaschine hinweg aufgenommen wird.

Die Spritzgießmaschine kann einen Datenspeicher umfassen, in dem das Schallsignal gespeichert wird. Der Datenspeicher kann beispielsweise ein Bestandteil einer Steuereinhieit der Spritzgießmaschine sein oder ein Bestandteil einer Auswerteeinheit des Schallsensors sein. Die Speicherung kann zusammen mit einem Zeitsignal erfolgen, sodass es möglich ist, das Schallsignal oder Abschnitte des Schallsignals nachträglich einem Spritzgussvorgang zuzuordnen. Während eines Arbeitszyklus einer Spritzgießmaschine wird eine Abfolge von Geräuschen erzeugt. Dazu gehören neben dem Geräusch des Verdampfungsvorgangs zum Beispiel ein Geräusch beim Schließen der Spritzgussform, ein durch den Einspritzvorgang verursachtes Geräusch, ein Geräusch beim Öffnen der Spritzgussform, ein Geräusch beim Auswerfen des erzeugten Spritzgussteils aus der Spritzgussform. Im Laufe eines Spritzgussvorgangs folgen diese Geräusche normalerweise zeitlich aufeinander. Insbesondere findet der Verdampfungsvorgang in einem Zeitraum statt, in dem die Form weder geöffnet noch geschlossen wird noch ein fertiges Spritzgussteil ausgeworfen wird noch ein Einspritzvorgang stattfindet. Durch richtige zeitliche Zuordnung kann deswegen ermittelt werden, welcher Teil einer längeren Geräuschaufnahme zu dem Verdampfungsvorgang gehört.

Das Schallsignal kann mit einem Schallsensor aufgezeichnet werden. Der Schallsensor kann benachbart zu der Spritzgussform angeordnet sein, sodass ein durch den Verdampfungsvorgang erzeugtes Geräusch in dem Schallsignal deutlich gegenüber Umgebungsgeräuschen hervortritt. Die Spritzgießmaschine kann eine Steuereinheit umfassen, die dazu ausgelegt ist, den Schallsensor so anzusteuern, dass in gewünschten Phasen eines Spritzgussvorgangs ein Schallsignal aufgezeichnet wird.

Es ist nicht erforderlich, dass die Steuereinheit eine bauliche Einheit ist. Möglich ist beispielsweise auch, dass der Spritzgießvorgang mit einem ersten Steuermodul angesteuert wird und die Kühlvorrichtung mit einem zweiten Steuermodul angesteuert wird. Es kann sich um eine Master-Slave-Konfiguration handeln, bei der das erste Steuermodul als Master und das zweite Steuermodul als Slave eingesetzt wird. Der Schallsensor kann von einem dieser Steuermodule angesteuert werden. Möglich ist auch, dass der Schallsensor mit einem eigenen Steuermodul versehen ist.

Mit dem Verdampfungsvorgang geht ein charakteristisches Geräusch einher, das mit dem Ende des Verdampfungsvorgangs ausklingt. Das Ende des Verdampfungsvorgangs entspricht deswegen normalerweise einem Abfall des Pegels des Schallsignals. Die Steuereinheit kann dazu ausgelegt sein, aus einem Abfall des Pegels des Schallsignals auf das Ende des Verdampfungsvorgangs zu schließen. Beispielsweise kann die Steuereinheit das Ende des Verdampfungsvorgangs annehmen, wenn der Pegel des Schallsignals ausgehend von einem während des Verdampfungsvorgangs erreichten Maximalwert auf einen vorgegebenen Schwellwert abgesunken ist. Der Schwellwert kann beispielsweise 40 % unterhalb des Maximalwerts liegen.

Solange die Flüssigkeit in der Verdampfungskammer verdampft, hängt die Kühlwirkung unmittelbar von der Verdampfungstemperatur ab. Führt man über diesen Zeitpunkt hinaus Flüssigkeit zu der Verdampfungskammer zu, so würde die weitere Abkühlung des Kunststoffmaterials sich aus einer Erwärmung der Flüssigkeit ergeben. Dies hätte zur Folge, dass die Temperatur des Kunststoffmaterials unter die Verdampfungstemperatur sinkt. Eine solche übermäßige Kühlung ist unerwünscht, weil sie sich negativ auf die Struktur des Kunststoffmaterials und damit auf die Qualität des Spritzgussteils auswirken kann. Das Verfahren kann deswegen so durchgeführt werden, dass durch das Ende des Verdampfungsvorgangs eine Beendigung der Flüssigkeitszufuhr zu der Verdampfungskammer, also eine Beendigung der Förderphase ausgelöst wird. Der Zeitraum zwischen dem Ende des Verdampfungsvorgangs und dem Ende der Förderphase kann kürzer sein als 5 s, vorzugsweise kürzer sein als 2 s, weiter vorzugsweise kürzer sein als 1 s.

Das Verfahren kann so durchgeführt werden, dass das aufgenommene Schallsignal über einer Auswerteeinheit des Schallsensors für eine manuelle Auswertung zur Verfügung gestellt wird. Eine Bedienperson kann anhand der aufgezeichneten Daten ermitteln, wie lange der Verdampfungsvorgang für eine bestimmte Art von Spritzgussvorgang dauert. Anschließend kann die Spritzgießmaschine so konfiguriert werden, dass die Förderphase für diese Art Spritzgussvorgang eine geeignete Länge hat. Es ist in diesem Fall nicht erforderlich, dass das Schallsignal während des Betriebs in der Steuereinheit der Spritzgießmaschine verarbeitet wird.

In einer Ausführungsform wird das Schallsignal zu einer Steuereinheit der Spritzgussmaschine zurückgeführt, wobei die Steuereinheit dazu ausgelegt ist, anhand des Schallsignals Einfluss auf den laufenden Spritzgussvorgang zu nehmen. Die Rückführung des Schallsignals zu der Steuereinheit kann ein Bestandteil eines geschlossenen Regelkreises sein. In einer Ausführungsform wird die Förderphase innerhalb eines geschlossenen Regelkreises beendet, innerhalb dessen das Schallsignal als Regelgröße verwendet wird. Die Förderphase kann beispielsweise dadurch beendet werden, dass die Hochdruckpumpe ausgeschaltet wird, mit der die Flüssigkeit zu der Verdampfungskammer zugeführt wird.

Zu Beginn der Förderphase kann in der Verdampfungskammer Atmosphärendruck anliegen, was bedeutet, dass der Verdampfungsvorgang bei einer Temperatur in der Größenordnung von 100 °C stattfindet. Alternativ kann durch Einstellen des Drucks in der Verdampfungskammer auf die Verdampfungstemperatur Einfluss genommen werden. Das Verfahren kann so durchgeführt werden, dass zu Beginn der Förderphase ein von Atmosphärendruck abweichender Druck in der Verdampfungskammer anliegt.

Der zu Beginn der Förderphase anliegende Druck in der Verdampfungskammer kann höher sein als Atmosphärendruck. Dies führt zu einer Verminderung der Kühlwirkung verglichen mit einem Zustand, in dem in der Verdampfungskammer Atmosphärendruck anliegt. Dies liegt zum einen daran, dass sich die Verdampfungstemperatur mit steigendem Druck erhöht. Zum anderen vermindert sich die Druckdifferenz gegenüber dem in der Flüssigkeitsleitung angelegten Druck, was zur Folge hat, dass die in Verdampfungskammer eintretende Flüssigkeitsmenge sich reduziert. Ein aus dem Verdampfungsvorgang resultierender Druckanstieg in der Verdampfungskammer kann über eine Ableitung der Verdampfungskammer abgebaut werden, beispielsweise in dem in der Ableitung ein Überströmventil angeordnet ist, das öffnet, wenn der an dem Überströmventil anliegende Druck einen vorgegebenen Schwellenwert überschreitet.

Möglich ist alternativ auch, dass zu Beginn der Förderphase ein Druck in der Verdampfungskammer anliegt, der niedriger ist als Atmosphärendruck. Die Spritzgießmaschine kann eine Vakuumpumpe umfassen, mit der ein solcher Druck in der Verdampfungskammer angelegt wird. Ein Unterdruck in der Verdampfungskammer führt zu einer Erhöhung der Kühlwirkung.

Die Erfindung betrifft auch eine Kunststoff-Spritzgießmaschine mit einer Spritzgussform und mit einer Zuführeinheit zum Einspritzen eines Kunststoffmaterials in eine Kavität der Spritzgussform. Die Spritzgussform umfasst einen in die Kavität hineinragenden und mit einer Verdampfungskammer versehenen Formkern und eine stromaufwärts der Verdampfungskammer angeordneten Hochdruckpumpe zum Fördern einer Flüssigkeit in die Verdampfungskammer. Die Spritzgießmaschine umfasst weiter einen Schallsensor, der dazu ausgelegt ist, ein Schallsignal von in der Spritzgussform entstehenden Geräuschen aufzunehmen, während die Hochdruckpumpe Flüssigkeit in die Verdampfungskammer fördert.

Die Kunststoff-Spritzgießmaschine kann eine Steuereinheit umfassen. Die Steuereinheit kann dazu ausgelegt sein, das Zusammenspiel der Komponenten während eines Arbeitszyklus der Kunststoff-Spritzgießmaschine anzusteuern. Dazu kann die Steuereinheit Steuersignale geben, die ein oder mehrere der nachfolgenden Schritte auslösen. Die Schritte können in der nachfolgend angegebenen Reihenfolge oder in anderer Reihenfolge durchgeführt werden. Die Steuereinheit kann einen Aktuator ansteuern, mit dem die Spritzgussform in einen geschlossenen Zustand gebracht wird. Die Steuereinheit kann die Zuführeinheit ansteuern, sodass in einer Einspritzphase ein Kunststoffmaterial in die Kavität der Spritzgussform eingespritzt wird. Die Steuereinheit kann die Zuführeinheit ansteuern, sodass in einer an die Einspritzphase anschließenden Nachdrückphase Druck auf das Kunststoffmaterial in der Kavität ausgeübt wird. Die Steuereinheit kann die Hochdruckpumpe ansteuern, so dass in einer Förderphase kontinuierlich Flüssigkeit in die Verdampfungskammer gefördert wird. Die Steuereinheit kann die Hochdruckpumpe ansteuern, sodass der Fördervorgang beendet wird. Die Steuereinheit kann den Aktuator der Spritzgussform ansteuern, sodass die Spritzgussform in einen geöffneten Zustand gebracht wird. Die Steuereinheit kann einen Schallsensor ansteuern, um eine Schallaufzeichnung in Gang zu setzen oder zu beenden. Die Steuereinheit kann in Abhängigkeit von einem aufgenommenen Schallsignal die Hochdruckpumpe ansteuern.

Die Kühlvorrichtung kann einen Flüssigkeitsvorrat umfassen, aus dem heraus die Flüssigkeit zu einer in die Verdampfungskammer mündenden Austrittsöffnung zugeführt wird. Die Zufuhr der Flüssigkeit kann durch eine Flüssigkeitsleitung erfolgen, die sich zwischen dem Flüssigkeitsvorrat und der Austrittsöffnung erstreckt. Die Spritzgießmaschine kann eine Hochdruckpumpe umfassen, mit der die Flüssigkeit zu der Austrittsöffnung gefördert wird.

Der Formkern kann sich von einem an den Körper der Spritzgussform anschließenden proximalen Ende bis zu einem distalen Ende erstrecken. Das distale Ende kann ein freies Ende in der Kavität bilden. Die Vorteile der Erfindung kommen besonders zur Geltung, wenn der Formkern schlank ausgebildet ist. Ein zu dem distalen Ende benachbarter distaler Abschnitt des Formkerns hat vorzugsweise einen größten Durchmesser von nicht mehr als 20 mm, vorzugsweise nicht mehr als 10 mm, weiter vorzugsweise nicht mehr als 7 mm. Kleiner als 3 mm ist der größte Durchmesser in der Regel nicht. Der zum distalen Ende benachbarte Abschnitt kann sich über wenigstens 30 %, vorzugsweise wenigstens 50 %, weiter vorzugsweise wenigstens 70 % der Länge erstrecken, die der Formkern in die Kavität hineinragt.

Die Verdampfungskammer kann benachbart zu dem distalen Ende des Formkerns angeordnet ist. Innerhalb des Formkerns kann ein erster Kanal ausgebildet sein, durch den die Flüssigkeit zu der Verdampfungskammer zugeführt wird. Der erste Kanal bildet einen Abschnitt der Flüssigkeitsleitung zwischen dem Flüssigkeitsvorrat und der Austrittsöffnung. Innerhalb des Formkerns kann ein zweiter Kanal ausgebildet sein, durch den das Gas-Flüssigkeit-Gemisch aus der Verdampfungskammer abgeführt wird. Die Querschnittsfläche des zweiten Kanals kann größer sein als die Querschnittsfläche des ersten Kanals, vorzugsweise wenigstens um den Faktor zwei, weiter vorzugsweise wenigstens um den Faktor fünf, weiter vorzuweisen wenigstens um den Faktor zehn größer. In einer Ausführungsform erstreckt sich der erste Kanal im Inneren des Rohrs und der zweite Kanal innerhalb des Ringkanals. Möglich ist auch die umgekehrte Gestaltung.

Die Offenbarung umfasst Weiterbildungen des Verfahrens mit Merkmalen, die im Zusammenhang der erfindungsgemäßen Kunststoff-Spritzgießmaschine beschrieben sind. Die Offenbarung umfasst Weiterbildungen der Kunststoff-Spritzgießmaschine, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer erfindungsgemäßen Spritzgießmaschine;
- Fig. 2:: den Formkern der Spritzgießmaschine aus Fig. 1 in vergrößerter Darstellung;
- Fig. 3:: ein schematisch dargestelltes Schallsignal während eines Arbeitszyklus der Spritzgießmaschine;
- Fig. 4:: eine Blockdarstellung einer erfindungsgemäßen Spritzgießmaschine;
- Fig. 5, 6:: die Darstellung gemäß Fig. 3, 4 bei einer alternativen Ausführungsform der Erfindung;
- Fig. 7:: die Darstellung gemäß Fig. 4 bei einer alternativen Ausführungsform der Erfindung.

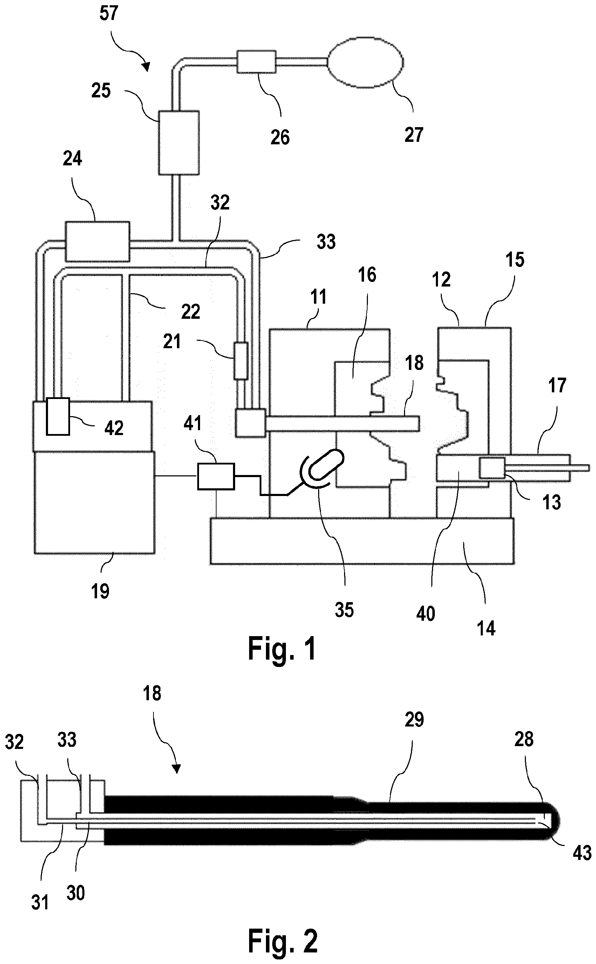

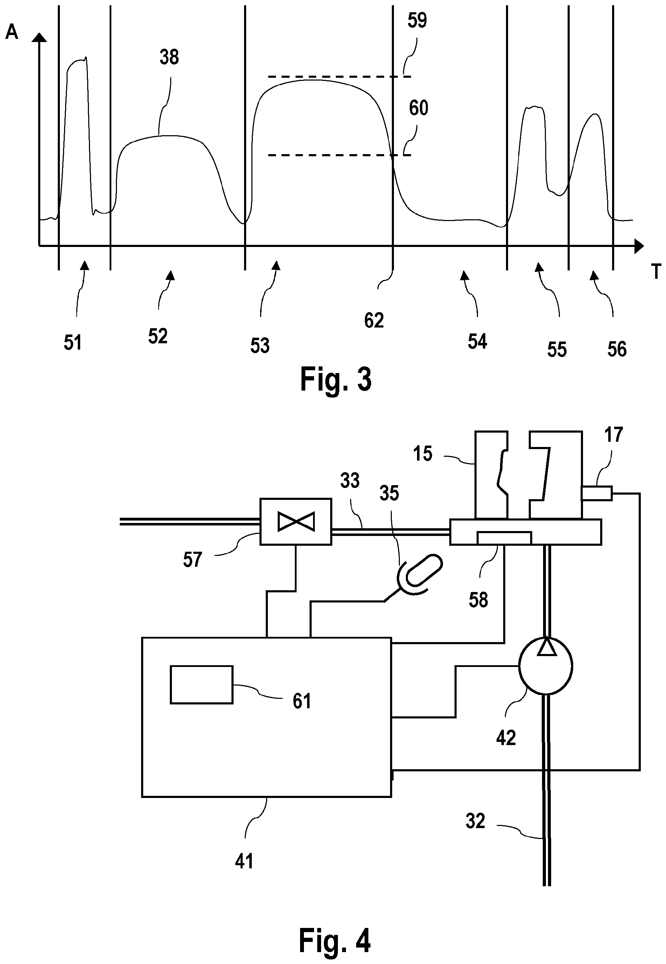

Eine in Fig. 1 gezeigte Spritzgießmaschine umfasst einen Rahmen 14, der eine aus zwei Formhälften 11, 12 bestehende Spritzgussform 15 trägt. In Fig. 1 ist die Spritzgussform 15 im geöffneten Zustand gezeigt. Zum Schließen der Spritzgussform 15 werden die beiden Formhälften 11, 12 aufeinander zu bewegt, sodass im Inneren der Spritzgussform 15 eine rundherum abgeschlossene Kavität 16 gebildet wird. In die Kavität 16 ragt ein mit der ersten Formhälfte 11 verbundener Formkern 18 hinein. Die Spritzgießmaschine umfasst Aktuatoren 58 (Fig. 4), mit denen ein oder beide Formhälften 11, 12 in geeigneter Weise relativ zu dem Rahmen 14 bewegt werden können.

Nach dem Schließen der Spritzgussform 15 wird eine Kolbenschnecke 13 einer Zuführeinheit 17 in Gang gesetzt, um in einer Einspritzphase ein Kunststoffmaterial in flüssigem Zustand in den Innenraum der Spritzgussform 15 einzuspritzen, sodass die Kavität 16 vollständig mit dem Kunststoffmaterial gefüllt ist. Nach dem Ende der Einspritzphase beginnt die Kühlphase, in der die Temperatur des Kunststoffmaterials durch Abgabe von Wärme an die Umgebung sinkt. Zu Beginn der Kühlphase hält die Kolbenschnecke in einer Nachdrückphase den auf das Kunststoffmaterial wirkenden Druck aufrecht erhält, bis das Kunststoffmaterial in einem Bereich 40 zwischen der Zuführeinheit 17 und der Kavität 16 ausgehärtet ist. Anschließend härtet das Kunststoffmaterial in der Kavität 16 vollständig aus, ohne dass noch Druck von außen ausgeübt wird. Nach dem vollständigen Aushärten des Kunststoffmaterials wird die Spritzgussform 15 geöffnet. Ein Spritzgussteil, dessen Form der Kavität 16 entspricht, wird aus der Spritzgussform 15 entnommen. Das Spritzgussteil hat eine Vertiefung, die dem Formkern 18 entspricht.

Während eines Abschnitts der Kühlphase wird dem Kunststoffmaterial in der Umgebung des Formkerns 18 gezielt Wärme entzogen. Dazu ist im Inneren des Formkerns 18 eine Sackbohrung ausgebildet, die sich fast bis zum distalen Ende des Formkerns 18 erstreckt, siehe Fig. 2. Das Ende der Bohrung wird durch eine im Inneren des Formkerns 18 angeordnete Verdampfungskammer 28 gebildet. Im Zentrum der Bohrung erstreckt sich ein Kapillarrohr 30, an dessen distalem Ende eine in die Verdampfungskammer 28 mündende Austrittsöffnung 43 ausgebildet ist. Ein proximales Ende des Kapillarrohrs 30 ist an eine Zuleitung 32 angeschlossen. Zwischen dem Kapillarrohr 30 und der Wand 29 des Formkerns 18 ist ein ringförmiger Rückkanal ausgebildet, der an eine Rückleitung 33 angeschlossen ist.

Die Zuleitung 32 und die Rückleitung 33 sind an ein Zentralmodul 19 angeschlossen, das zusammen mit der Verdampfungskammer 28 und weiteren Komponenten eine Kühlvorrichtung der Spritzgießmaschine bildet. Das Zentralmodul 19 umfasst eine Hochdruckpumpe 42, die an das andere Ende der Zuleitung 32 angeschlossen ist. Die Hochdruckpumpe 42 ist dazu ausgelegt, in einer Förderphase unter einem hohen Druck, der beispielsweise um 20 bar höher als Atmosphärendruck sein kann, Wasser in Richtung des Kapillarrohrs 30 zu fördern. Das Wasser tritt als feiner Strahl aus der Austrittsöffnung 43 des Kapillarrohrs 30 aus und verteilt sich in der Verdampfungskammer 28. Die Temperatur in der Verdampfungskammer 28 und in dem distalen Bereich des ringförmigen Rückkanals ist so hoch, dass die Flüssigkeit verdampft. Durch den Verdampfungsvorgang wird dem Kunststoffmaterial in der Umgebung des Formkerns 18 Wärme entzogen.

Durch einen Verdampfungsvorgang bei Atmosphärendruck würde das Kunststoffmaterial in diesem Ausführungsbeispiel zu stark gekühlt. Mit einer Druckregeleinheit 57 wird deswegen in der Verdampfungskammer 28 ein Druck angelegt, der höher ist als Atmosphärendruck. Dies wirkt sich in doppelter Hinsicht aus. Erstens erhöht sich mit steigendem Druck die Verdampfungstemperatur, wodurch die Temperaturdifferenz gegenüber dem Kunststoffmaterial abnimmt. Zweitens reduziert sich die aus dem Kapillarrohr 30 austretende Flüssigkeitsmenge. Beides hat zur Folge, dass dem Kunststoffmaterial weniger Wärme entzogen wird.

Um den gewünschten Druck in der Verdampfungskammer 28 anlegen zu können, ist eine Druckquelle 27 über einen einstellbaren Druckminderer 26 und eine erste Ventilkombination 25 an die Rückleitung 33 angeschlossen. Die erste Ventilkombination 25 umfasst ein Rückschlagventil und ein schaltbares Sperrventil, das im geöffneten Zustand einen freien Durchgang zwischen der Rückleitung 33 und dem Rückschlagventil bietet und das im geschlossenen Zustand den Durchgang verschließt. In der Druckquelle 27, bei der es sich beispielsweise um einen Druckspeicher oder eine unter Druck stehende Leitung handeln kann, liegt ein Druck P1 an, der mit dem einstellbaren Druckminderer 26 auf einen niedrigeren Druck P2 reduziert wird. Der mit dem Druckminderer 26 vorgegebene Druck P2 breitet sich bei geöffneter Ventilkombination 25 über die Rückleitung 33 zu der Verdampfungskammer 28 aus, sofern in der Rückleitung 33 und der Verdampfungskammer 28 ein Druck anliegt, der geringer ist als der Druck P2. Ist umgekehrt der Druck in der Rückleitung 33 höher als der vom Druckminderer 26 vorgegebene Druck P2, so schließt das Rückschlagventil der Ventilkombination 25, und es findet kein Druckausgleich statt.

Zu Beginn eines Arbeitszyklus der Spritzgießmaschine liegt in der Verdampfungskammer 28 Atmosphärendruck an. Nach Öffnen der ersten Ventilkombination 25 breitet sich der Druck P2 bis in die Verdampfungskammer 28 aus. Die Kühlphase wird durch eine aktive Kühlung begleitet, indem mit der Hochdruckpumpe 42 Wasser die Verdampfungskammer gefördert wird. Der Druck P2 ist so eingestellt, dass dem Kunststoffmaterial in der Umgebung des Formkerns 18 Wärme entzogen wird, ohne dass die Struktur des Kunststoffmaterials durch übermäßige Kühlung Schaden nimmt.

Mit dem Fördervorgang steigt der Druck in der Verdampfungskammer an, weil der Druck, mit dem die Flüssigkeit in die Verdampfungskammer gefördert wird, höher ist als der in der Verdampfungskammer anliegende Druck P2. Weiter geht mit dem Verdampfungsvorgang eine Expansion einher, die ebenfalls eine Druckerhöhung in der Verdampfungskammer 28 bewirkt. Der erhöhte Druck breitet sich durch die Rückleitung 33 aus und bewirkt, dass das Rückschlagventil der ersten Ventilkombination 25 schließt. In der Rückleitung 33 ist eine zweite Ventilkombination 24 angeordnet, die ein Überströmventil und ein dazu parallel geschaltetes schaltbares Sperrventil umfasst. Das Sperrventil ist geschlossen. Das Überströmventil hat einen Öffnungsdruck, der etwas höher ist als der mit dem Druckminderer 26 vorgegebene Druck P2, sodass das Überströmventil bei einer von der Verdampfungskammer 28 ausgehenden Druckerhöhung zügig öffnet. Auch während der Förderphase steigt der Druck in der Verdampfungskammer 28 deswegen nicht wesentlich an.

Nach dem Ende der Förderphase wird die zweite Ventilkombination 24 geöffnet und die erste Ventilkombination 25 geschlossen, sodass über die Rückleitung 33 ein Druckausgleich auf Atmosphärendruck stattfindet. Dabei wird das Wasser-GasGemisch aus der Verdampfungskammer 28 zurück zu dem Zentralmodul 19 geführt. In dem Gemisch enthaltene Wasseranteile werden in dem Zentralmodul 19 kondensiert und können in einer nachfolgenden Förderphase erneut verwendet werden.

Die zwischen dem Zentralmodul 19 und der Verdampfungskammer 18 angeordnete Zuleitung 32 umfasst eine Verzweigung, an die eine Druckluftleitung 22 angeschlossen ist. Nachdem der Druckausgleich auf Atmosphärendruck in der Verdampfungskammer 28 stattgefunden hat, kann aus dem Zentralmodul 19 ein Druckluftstoß in die Druckluftleitung 22 geleitet werden, der sich durch das Kapillarrohr 33 hindurch zu der Verdampfungskammer 28 ausbreitet, sodass dort verbliebene Flüssigkeitsreste durch die Rückleitung 33 ausgeblasen werden. Auf diese Weise können definierte Ausgangsbedingungen für den nachfolgenden Arbeitszyklus der Spritzgießmaschine erzeugt werden, falls dies gewünscht ist.

Ein Rückschlagventil 21 ist in der Zuleitung 32 benachbart zu dem Formkern 18 angeordnet. Das Rückschlagventil 21 wird wirksam, wenn zu Beginn eines Arbeitszyklus der Spritzgießmaschine der Druckausgleich zwischen dem Druck P2 des Druckminderers und der Verdampfungskammer 28 durchgeführt wird. Der gegenüber Atmosphärendruck erhöhte Druck P2 breitet sich nur bis zur dem Rückschlagventil 21 aus. Auf diese Weise kann die Flüssigkeit in der nachfolgenden Förderphase leichter zu der Verdampfungskammer 28 vordringen.

Die Spritzgießmaschine umfasst eine Steuereinheit 41, die das Zusammenspiel der Komponenten steuert. Zu Beginn eines Arbeitszyklus der Spritzgießmaschine wird die Spritzgussform 15 geschlossen und die erste Ventilkombination 25 geöffnet, sodass der Druck in der Verdampfungskammer 28 von Atmosphärendruck auf den mit dem Druckminderer 26 vorgegebenen Druck P2 ansteigt. Die Zuführeinheit 17 wird aktiviert, um die Kavität 16 der Spritzgussform 15 mit Kunststoffmaterial zu füllen. Der von der Zuführeinheit 17 ausgeübte Druck wird während der anschließenden Nachdrückphase aufrechterhalten. Die Hochdruckpumpe 42 wird angesteuert, sodass während der Kühlphase Wasser in die Verdampfungskammer 28 gefördert wird und dort verdampft. Die Spritzgussform 15 wird geöffnet, sodass das Spritzgussteil entnommen werden kann. Parallel wird die erste Ventilkombination 25 geschlossen und die zweite Ventilkombination 24 geöffnet, um den Druck in der Verdampfungskammer 28 über das Zentralmodul 19 auf Atmosphärendruck auszugleichen. Mit einem von dem Zentralmodul 19 abgegebenen Druckluftstoß werden definierte Ausgangsbedingungen für den nachfolgenden Arbeitszyklus der Spritzgießmaschine geschaffen.

Durch den Verdampfungsvorgang entsteht ein charakteristisches Geräusch, das sich über die Wand des Formkerns 18 und die Struktur der Spritzgussform 15 ausbreitet, sodass aus der Spritzgussform 15 heraus ein Schallsignal an die Umgebung abgegeben wird. Benachbart zu der Spritzgussform 15 ist ein Schallsensor 35 angeordnet, der die während des Spritzgussvorgangs entstehenden Geräusche aufnimmt.

In Fig. 3 ist ein während eines Spritzgussvorgangs mit dem Schallsensor 35 aufgenommenes Schallsignal 38 schematisch dargestellt. Aufgetragen ist der Pegel A des Schallsignals 38 über der Zeit T. In einer ersten Phase 51 des Spritzgussvorgangs wird die Spritzgussform 15 geschlossen, was ein kurzes Geräusch mit hohem Pegel A verursacht. In einer zweiten Phase 52 (Einspritzphase) wird die Zuführeinheit 17 in Betrieb gesetzt, um Kunststoffmaterial zu der Kavität 16 der Spritzgussform 15 zuzuführen, was mit einem längeren Geräusch von mittlerem Pegel A einhergeht. Während einer dritte Phasen 53 (Förderphase) wird Wasser zu der Verdampfungskammer 28 zugeführt, das dort verdampft und ein länger anhaltendes Geräusch mit höherem Pegel verursacht. Das Verdampfungsgeräusch endet, sobald die Temperatur in der Umgebung des Formkerns 18 nicht mehr höher ist als die Verdampfungstemperatur des Wassers. Es steht dann in der Umgebung des Formkerns 18 nicht mehr die zum Verdampfen erforderliche Energie zur Verfügung. In einer vierten Phase 54, in der keine besonderen Geräusche entstehen, kühlt das Kunststoffmaterial weiter, ohne dass die Kühlung noch durch einen Verdampfungsvorgang unterstützt wird. Die dritte Phase 53 und die vierte Phase 54 bilden gemeinsam die Kühlphase des Spritzgussvorgangs. Weitere Geräusche entstehen in einer fünften Phase 55 durch das Öffnen der Spritzgussform 15 und in einer sechsten Phase 56 durch das Auswerfen des fertigen Spritzgussteils.

Würde über das Ende des Verdampfungsvorgangs hinaus Wasser zu der Verdampfungskammer 28 zugeführt, so würde das Kunststoffmaterial in der Umgebung des Formkerns 18 auf eine Temperatur unterhalb der Verdampfungstemperatur gekühlt, was unerwünscht ist. Bei der erfindungsgemäßen Spritzgießmaschine ist deswegen ein Regelkreis vorgesehen, mit dem die Förderphase 53 in Abhängigkeit von dem Schallsignal 38 beendet wird.

Das Zusammenspiel der Komponenten der Spritzgießmaschine während des Spritzgussvorgangs unterliegt der Kontrolle der Steuereinheit 41, siehe Fig. 4. Nachdem über die Druckregeleinheit 57 der gewünschte Druck in der Verdampfungskammer 28 eingestellt ist, wird in der ersten Phase 51 der Aktuator 58 angesteuert, um die Spritzgussform 15 zu schließen. In der Einspritzphase 52 wird die Zuführeinheit 17 aktiviert, um die Kavität 16 der Spritzgussform 15 mit Kunststoffmaterial zu füllen. In der Förderphase 53 erhält die Hochdruckpumpe 42 ein Steuersignal, gemäß dem Wasser in die Verdampfungskammer 28 gefördert wird. Während der Förderphase 53 wird in der Steuereinheit 41 das mit dem Schallsensor 35 aufgenommene Schallsignal 38 ausgewertet. Nachdem der Pegel A des Schallsignals 38 einen Maximalwert 59 erreicht hat, wartet die Steuereinheit 41, bis der Pegel A des Schallsignals 38 auf einen Zwischenwert 60 abgesunken ist, der um 40 % niedriger liegt als der Maximalwert 59. Es wird angenommen, dass mit dem Eintreten dieser Bedingung das Ende 62 des Verdampfungsvorgangs erreicht ist. Die Steuereinheit 41 reagiert, indem sie die Hochdruckpumpe 42 mit einem weiteren Steuersignal abschaltet. Nach Ablauf der verbleibenden Kühlzeit in der vierten Phase 54, gibt die Steuereinheit 41 weitere Steuersignale, um die Spritzgussform 15 wieder zu öffnen und das fertige Spritzgussteil auszuwerfen.

Das Schallsignal 38 wird in einem Datenspeicher 61 gespeichert und in einer Form zur Verfügung gehalten, die eine Zuordnung zu einem bestimmten Spritzgussvorgang ermöglicht. So kann auch nachträglich überprüft werden, ob die Dauer des Verdampfungsvorgangs in Einklang mit den Vorgaben war.

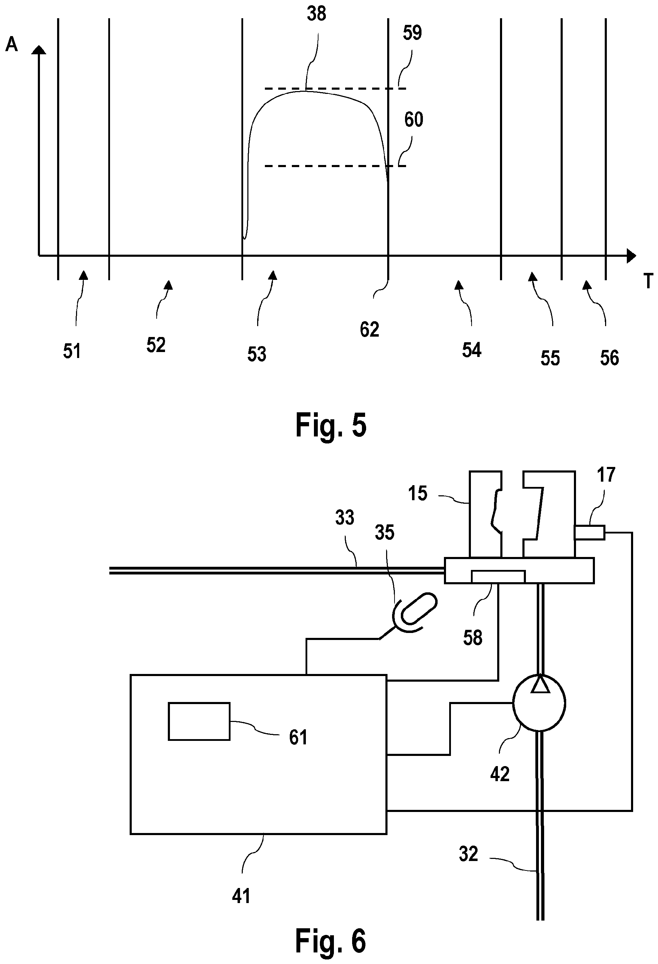

In den Fig. 5, 6 ist eine alternative Ausführungsform der Erfindung dargestellt. Die von der Verdampfungskammer 28 kommende Rückleitung 33 mündet in die Umgebung, sodass in der Verdampfungskammer 28 Atmosphärendruck anliegt. Das Schallsignal 38 wird nicht während des gesamten Spritzgussvorgangs 51-56 aufgezeichnet, sondern nur in der dritten Phase 53, in der das Verdampfungsgeräusch entsteht. Die Steuereinheit 41 aktiviert gleichzeitig die Hochdruckpumpe 42 und den Schallsensor 35. Sobald der Pegel A des Schallsignals 38 auf den Zwischenwert 60 abgesunken ist, schaltet die Steuereinheit 41 sowohl die Hochdruckpumpe 42 als auch den Schallsensor 35 wieder ab. Das in dem Datenspeicher 61 gespeicherte Schallsignal 38 beschränkt sich auf den Teil des Spritzgussvorgangs 51-56, der für eine Qualitätsdokumentation von Bedeutung ist.

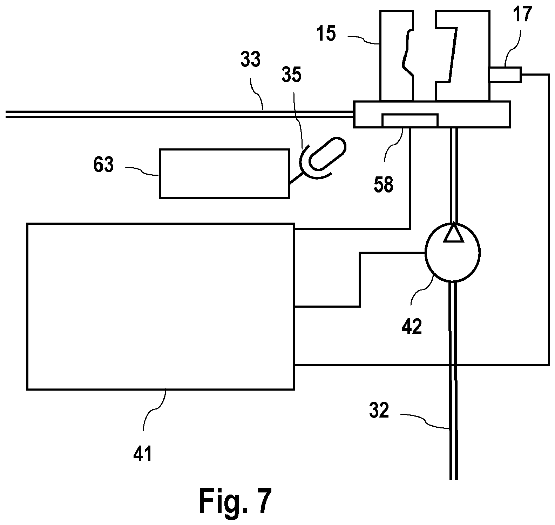

In Fig. 7 ist eine Ausführungsform gezeigt, bei der der Schallsensor 35 das Schallsignal 38 während des gesamten Spritzgussvorgangs aufzeichnet. Das Schallsignal 38 wird in einer Auswerteeinheit 63 des Schallsensors 35 gespeichert. In einer Konfigurationsphase werden mehrere Spritzgussvorgänge durchgeführt und die zugehörigen Schallsignale 38 aufgezeichnet. Eine Bedienperson ruft die Schallsignale 38 aus der Auswerteeinheit 63 ab und wertet diese manuell aus, um daraus eine für den jeweiligen Spritzgussvorgang geeignete Dauer der Förderphase 53 zu ermitteln. Anschließend wird die Steuereinheit 41 der Spritzgießmaschine so konfiguriert, dass die Förderphase 53 eine fest vorgegebene Länge hat, die sich aus den Erkenntnissen der Bedienperson ergibt.

## Patentansprüche

1. Verfahren zum Überwachen eines Spritzgussvorgangs, bei dem ein Kunststoffmaterial in eine Kavität (16) einer Spritzgussform (15) eingespritzt wird und bei dem das Kunststoffmaterial während einer Kühlphase (53, 54) in der Kavität (16) gehalten wird, bei dem die Spritzgussform (15) einen in die Kavität (16) hineinragenden und mit einer Verdampfungskammer (28) versehenen Formkern (18) aufweist, wobei während der Kühlphase (53, 54) eine Flüssigkeit in die Verdampfungskammer (28) gefördert wird, so dass die Flüssigkeit in der Verdampfungskammer (28) verdampft, und wobei während der Kühlphase (53, 54) ein Schallsignal (38) von in der Spritzgussform (15) entstehenden Geräuschen aufgenommen wird.

2. Verfahren nach Anspruch 1, wobei während einer Förderphase (53) Flüssigkeit zu der Verdampfungskammer (28) zugeführt wird und wobei die Förderphase (53) vor der Kühlphase (53, 54) endet.

3. Verfahren nach Anspruch 2, wobei die Förderphase (53) fortgeführt wird, bis die zugeführte Flüssigkeit in der Verdampfungskammer (28) nicht mehr verdampft.

4. Verfahren nach einem der Ansprüche 1 bis 3, wobei das aufgenommene Schallsignal (38) einen Zeitraum umfasst, in den das Ende (62) des Verdampfungsvorgangs fällt.

5. Verfahren nach Anspruch 4, wobei aus einem Abfall des Pegels des Schallsignals (38) auf das Ende (62) des Verdampfungsvorgangs geschlossen wird.

6. Verfahren nach einem der Ansprüche 2 bis 5, wobei durch das Ende (62) des Verdampfungsvorgangs eine Beendigung der Förderphase (53) ausgelöst wird.

7. Verfahren nach einem der Ansprüche 2 bis 6, wobei das Schallsignal (38) über eine Auswerteeinheit (36) des Schallsensors (35) für eine manuelle Auswertung zur Verfügung gestellt wird.

8. Verfahren nach einem der Ansprüche 2 bis 7, wobei die Förderphase (53) innerhalb eines geschlossenen Regelkreises beendet wird, innerhalb dessen das Schallsignal (38) als Regelgröße verwendet wird.

9. Verfahren nach einem der Ansprüche 1 bis 8, wobei zu Beginn der Förderphase (53) ein von Atmosphärendruck abweichender Druck in der Verdampfungskammer (28) anliegt.

10. Verfahren nach Anspruch 9, wobei der Druck in der Verdampfungskammer (28) zu Beginn der Förderphase (53) höher ist als Atmosphärendruck.

11. Kunststoff-Spritzgießmaschine mit einer Spritzgussform (15), einer Zuführeinheit (17) zum Einspritzen eines Kunststoffmaterials in eine Kavität (16) der Spritzgussform (15), wobei die Spritzgussform (15) einen in die Kavität (16) hineinragenden und mit einer Verdampfungskammer (28) versehenen Formkern (18) aufweist, mit einer Hochdruckpumpe (42) zum Fördern einer Flüssigkeit in die Verdampfungskammer (28), und mit einem Schallsensor (35), der dazu ausgelegt ist, ein Schallsignal (38) von in der Spritzgussform (15) entstehenden Geräuschen aufzunehmen, während die Hochdruckpumpe (42) Flüssigkeit in die Verdampfungskammer fördert.
